# EUROPEAN PATENT APPLICATION

(11) **EP 4 592 537 A1**
(43) Date of publication of application: **30.07.2025**
(21) Application number: 25152503.6
(22) Date of filing: 17.01.2025
(51) Int. Cl.: F16B 2/12

(54) **THREADED ROD HANGER**

(30) Priority: 23.01.2024 US 202463623934 P; 13.01.2025 US 202519018560
(71) Applicant: Illinois Tool Works Inc., Glenview IL 60025 (US)
(72) Inventor: WIATROWSKI, Darrell A., Glenview, IL 60025 (US)
(74) Representative: HGF

(57) **Abstract**

A threaded rod hanger that is quickly and easily attachable to an overhead structure, that enables a threaded rod to be quickly and easily attached to the threaded rod hanger, and that enables the relative height of the threaded rod to be adjusted after the threaded rod is attached to the threaded rod hanger.

## Description

### PRIORITY CLAIM

This application claims priority to and the benefit of U.S. Provisional Patent Application No. 63/623,934, filed January 23, 2024, docket no. 025140-2331, the entire contents of which are incorporated herein by reference.

### BACKGROUND

Various devices have been employed to hang threaded rods from structures such as overhead structures. For example, various device have been employed to hang threaded rods from structures wherein the threaded rods are employed to support fire sprinkler pipes from overhead structures.

There is a continuing need to develop improved devices for more quickly hanging threaded rods from overhead structures.

### SUMMARY

Various embodiments of the present disclosure provide a threaded rod hanger that is quickly and easily attachable to an overhead structure and to which a threaded rod is quickly and easily attachable.

Additional features and advantages of the present disclosure are described in, and will be apparent from, the following Detailed Description and the Figures.

### BRIEF DESCRIPTION OF THE FIGURES

Figure 1 is an exploded perspective view of a threaded rod hanger of one example embodiment of the present disclosure.
Figure 2 is a side cross-sectional view of the threaded rod hanger of Figure 1, showing the threaded rod hanger attached to an overhead structure and supporting a threaded rod.
Figure 3 is top view of the threaded rod hanger of Figure 1.
Figure 4 is a perspective view of a tool usable to install the threaded rod hanger of Figure 1.
Figure 5 is a fragmentary side view of the tool of Figure 4 being used to secure the threaded rod hanger of Figure 1 to an overhead structure.
Figure 6 is a perspective view of the threaded rod hanger of Figure 1, showing the threaded rod hanger attached to an overhead structure and supporting a threaded rod.
Figure 7 is a perspective view of a threaded rod hanger of another example embodiment of the present disclosure.
Figure 8 is a perspective view of the threaded rod hanger of Figure 7 secured to an overhead structure (shown in fragmentary) and supporting a threaded rod (shown in fragmentary).
Figure 9 is a fragmentary perspective view of the tool of Figure 4 being used to secure the threaded rod hanger of Figure 7 to an overhead structure (shown in fragmentary).
Figure 10 is a perspective view of a threaded rod hanger of another example embodiment of the present disclosure.
Figure 11 is a front view of the threaded rod hanger of Figure 10.
Figure 12 is a side view of the threaded rod hanger of Figure 10.
Figure 13 is a side cross-sectional view of the threaded rod hanger of Figure 10.
Figure 14 is an exploded perspective view of the threaded rod hanger of Figure 10.
Figure 15 is a perspective view of a threaded rod hanger of another example embodiment of the present disclosure.
Figure 16 is a front view of the threaded rod hanger of Figure 15.
Figure 17 is a side view of the threaded rod hanger of Figure 15.
Figure 18 is a side cross-sectional view of the threaded rod hanger of Figure 15.
Figure 19 is an exploded perspective view of the threaded rod hanger of Figure 15.

### DETAILED DESCRIPTION OF EXAMPLE EMBODIMENTS

While the features, devices, and apparatus described herein may be embodied in various forms, the drawings show and the specification describe certain exemplary and non-limiting embodiments. Not all of the components shown in the drawings and described in the specification may be required, and certain implementations may include additional, different, or fewer components. Variations in the arrangement and type of the components; the shapes, sizes, and materials of the components; and the manners of connections of the components may be made without departing from the spirit or scope of the claims. Unless otherwise indicated, any directions referred to in the specification reflect the orientations of the components shown in the corresponding drawings and do not limit the scope of the present disclosure. Further, terms that refer to mounting methods, such as mounted, attached, connected, and the like, are not intended to be limited to direct mounting methods but should be interpreted broadly to include indirect and operably mounted, attached, connected and like mounting methods. This specification is intended to be taken as a whole and interpreted in accordance with the principles of the present disclosure and as understood by one of ordinary skill in the art.

Various embodiments of the present disclosure provide a threaded rod hanger configured to facilitate hanging a threaded rod to an overhead structure. In various embodiments, the threaded rod hanger is quickly and easily attachable to an overhead structure and enables a threaded rod to be quickly and easily attached to the threaded rod hanger.

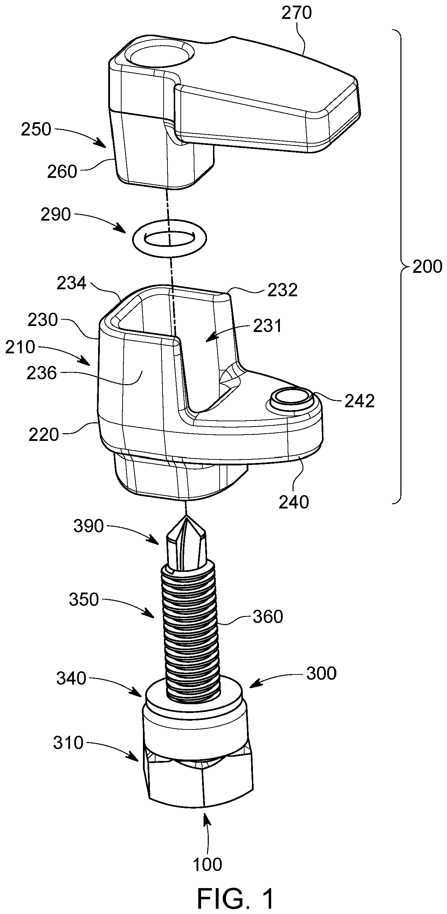

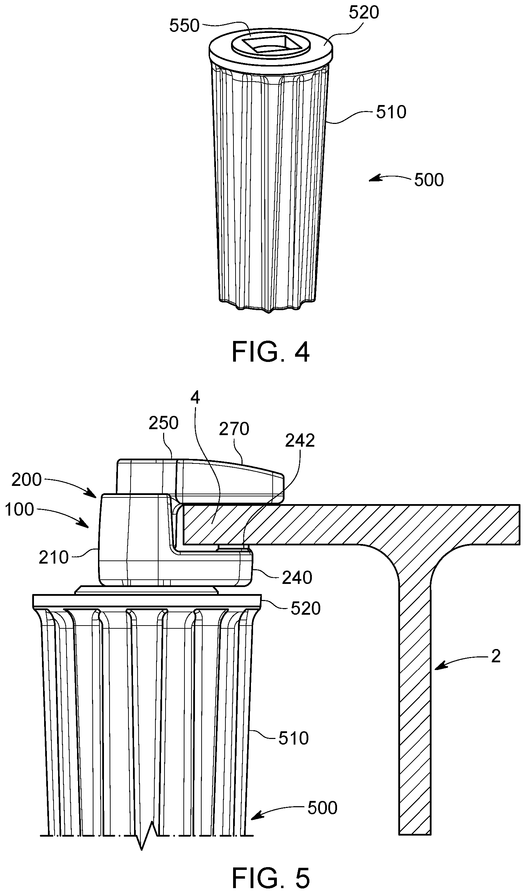

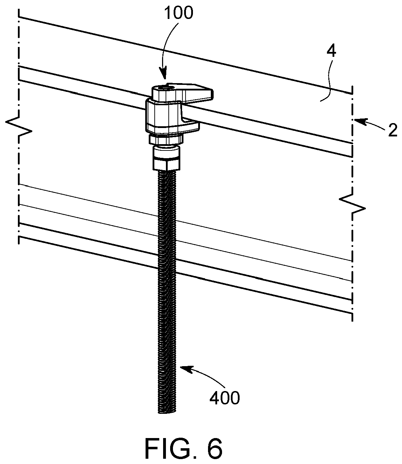

Figures 1, 2 and 3 illustrate a threaded rod hanger 100 of one example embodiment of the present disclosure. Figure 4 illustrates a tool 500 for installing the threaded rod hanger 100. Figure 5 illustrates the tool 500 being used to install the threaded rod hanger 100 on part 4 of an overhead structure 2. Figure 6 illustrates the threaded rod hanger 100 on a part 4 of an overhead structure 2.

The threaded rod hanger 100 includes: (1) a connector 200; and (2) a threaded rod receiver 300.

The connector 200 includes: (1) a lower arm 210; (2) an upper arm 250 couplable and specifically receivable by the lower arm 210; and (3) an O-ring 290. The O-ring 290 is configured to keep the threaded rod hanger 100 in an open position during shipping, then has no function after installation. It should be appreciated that alternative suitable devices for keeping threaded rod hanger 100 in an open position during shipping can be employed in accordance with the present disclosure.

More specifically, the lower arm 210 includes a base 220, a receiver 230 connected to and extending upwardly from the base 220, and a lower attachment hand 240 connected to and extending transversely from the base 220.

The base 220 is sized, shaped and otherwise configured to receive the threaded fastener 350.

The receiver 230 is sized, shaped, and otherwise configured to receive part of the upper arm 250. The receiver 230 includes connected walls 232, 234, and 236 that define a receiving area 231.

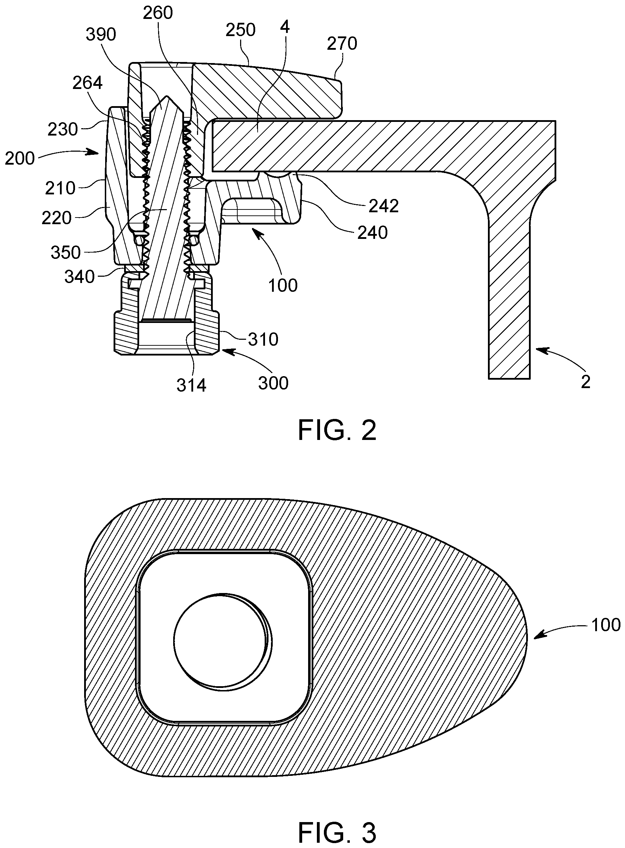

The lower attachment hand 240 is sized, shaped, and otherwise configured to engage a bottom surface of a part of the overhead structure 2 such as shown in Figures 2, 5, and 6. The attachment hand 240 includes an upwardly extending finger 242 configured to engage the bottom surface of the part 4 of the overhead structure 2.

The upper arm 250 includes an inserter 260 and an upper attachment hand 270.

The inserter 260 is sized, shaped, and otherwise configured to be partly inserted into and received by the receiving area 231 of the receiver 230 of the lower arm 210.

In this example embodiment, the inserter 260 includes an inner surface (not labeled) and inner threads 264 configured to be engaged by the outer threads of fastener 350.

In other embodiments, the inserter 260 includes an inner surface (not labeled) and no inner threads 264 configured to be engaged by the thread of fastener 350. In such other example embodiments, the inserter 260 is tapped by the threaded fastener 350. In such embodiments, when the threaded fastener 350 taps the inserter 260, a more perfect fit with no clearance issues can be formed between the inserter 260 and the threaded fastener 350. In other words, the process of using a self-drilling and tapping fastener can create a zero-clearance fit between fastener 350 and upper arm 250 such that vibration will not cause these parts to loosen over time and eliminate the need for a jam nut.

In various embodiments, the inserter 260 can have a bottom wall (not shown) that the threaded fastener drills through during the insertion process. In various such embodiments, that bottom wall can include a starter hole (not shown) for the drill tip of the threaded fastener.

In various embodiments, the inserter 260 can have inner threads with one or more anti-back out features (not shown) that prevent or limit the ability of the threaded fastener to be removed from the inserter.

The upper attachment hand 270 is sized, shaped, and otherwise configured to engage a top surface of the part 4 of the overhead structure 2 such as shown in Figures 2, 5, and 6.

The threaded rod receiver 300 includes: (1) a rod receiver 310; (2) a washer 340; (3) a threaded fastener 350; and (4) a drill bit 390.

The rod receiver 310 includes an inner surface (not labeled) and inner threads 314 sized, shaped, and otherwise configured to threadably receive a threaded rod (not shown).

The rod receiver 310 includes an outer surface (not labeled) sized, shaped, and otherwise configured to be engaged by a tool such as tool 500.

As mentioned above, depending on the embodiment of the inserter 260, the drill bit 390 is configured to engage and drill through part of the inserter (such as a bottom wall thereof) and form a hole in the inserter 260 of the upper arm 250.

The threaded fastener 350 is sized, shaped, and otherwise configured to be inserted through the base 220 of the lower arm 210 and to be threadably received by the inserter 260 of the upper arm 250.

More specifically, the threaded fastener 350 includes a shaft (not labeled) and a head (not labeled) fixedly connected to the shaft and sized, shaped, and otherwise configured to be inserted into and connected to the rod receiver 310, and more specifically into the upper portion thereof before part of the upper portion is inwardly bent to secure the head of the fastener 350. It should be appreciated that alternative suitable mechanisms for connecting rod receiver 310 to the head of fastener 350 can be employed in accordance with the present disclosure.

As mentioned above, the threaded fastener 350 includes outer threads 360 of the shaft that are configured to engage the inner threads 264 of the inserter 260 such as shown in Figure 2 in this example embodiment.

The threaded fastener 350 is thus configured to securely connect the lower are 210 to the upper arm 250. This secure connection causes the upper attachment hand 270 and the lower attachment hand 240 to engage and be securely attached to the part 4 of the overhead structure 2 such as shown in Figures 2 and 5.

In this example embodiment, these components are made from suitable metal materials. It should be appreciated that these components can be made from other suitable materials in accordance with the present disclosure.

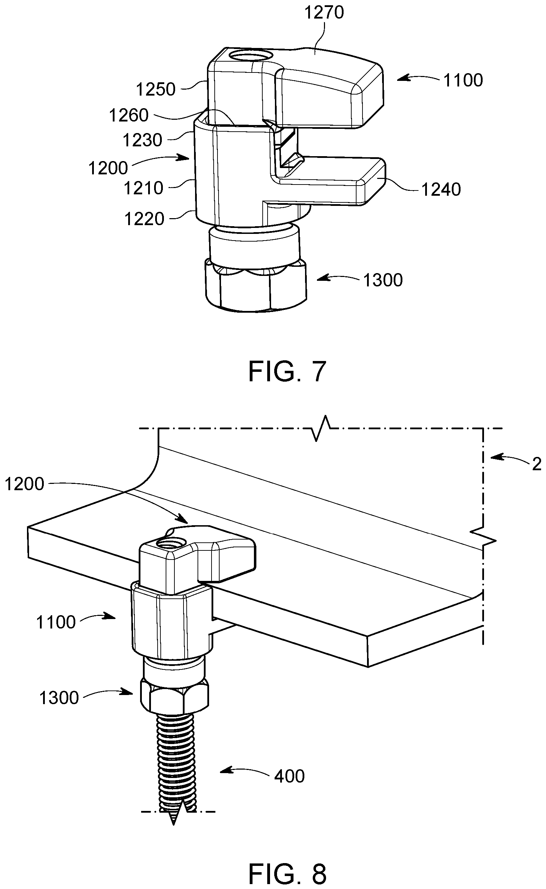

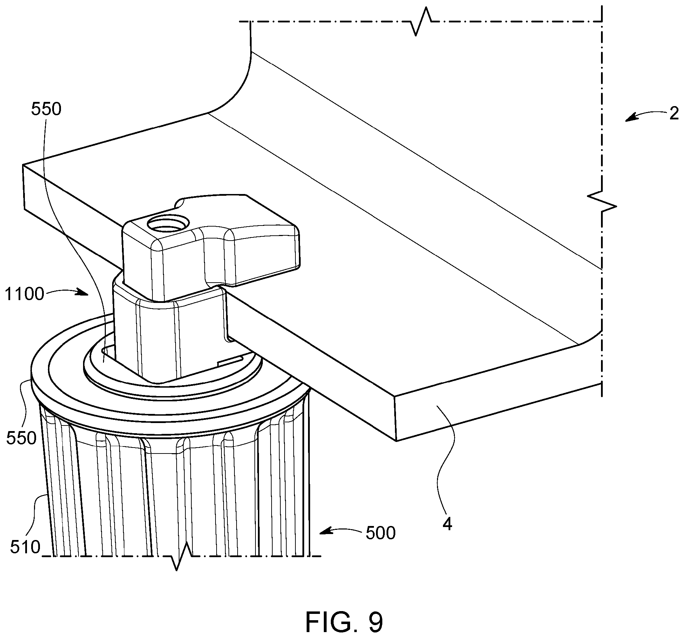

Figures 7, 8, and 9 illustrate a threaded rod hanger 1100 of another example embodiment of the present disclosure. Figures 8 and 9 illustrate the threaded rod hanger 1100 attached to an overhead structure 2. This threaded rod hanger 1100 is similar to the threaded rod hanger 100, but has certain different features.

The threaded rod hanger 1100 includes: (1) a connector 1200; and (2) a threaded rod receiver 1300.

The connector 1200 includes: (1) a lower arm 1210; and (2) an upper arm 1250 couplable and specifically receivable by the lower arm 1210. Although not shown, the connector 1200 can include a metallic retaining ring such as the ring 290 (described above) that is configured to keep the threaded rod hanger 1100 in an open position during shipping, and then has no function after installation.

More specifically, the lower arm 1210 includes a base 1220, a receiver 1230 connected to and extending upwardly from the base 1220, and a lower attachment hand 1240 connected to and extending transversely from the base 1220.

The base 1220 is configured to receive the threaded fastener (not shown or labeled in Figures 7, 8, and 9).

The receiver 1230 is sized, shaped, and otherwise configured to receive part of the upper arm 1250. The receiver 1230 includes connected walls (not labeled) that define a receiving area (not shown).

The lower attachment hand 1240 is sized, shaped, and otherwise configured to engage a bottom surface of a part 4 of the overhead structure 2 such as shown in Figures 8 and 9. In this alternative embodiment, the attachment hand 1240 does not include an upwardly extending finger configured to engage the bottom surface of the part 4 of the overhead structure 2.

The upper arm 1250 includes an inserter 1260 and an upper attachment hand 1270.

The inserter 1260 is sized, shaped, and otherwise configured to be partly inserted into and received by the receiving area of the receiver 1230 of the lower arm 1210.

In this example embodiment, the inserter 1260 includes an inner surface (not shown) and inner threads (not shown) configured to be engaged by the thread of fastener 1350.

In other embodiments, the inserter 1260 includes an inner surface (not labeled) and no inner threads 1264 configured to be engaged by the thread of fastener. In such other example embodiments, the inserter 1260 is tapped by the threaded fastener. In such embodiments, when the threaded fastener taps the inserter 1260, a more perfect fit with no clearance issues can be formed between the inserter 1260 and the threaded fastener. In other words, the process of using a self-drilling and tapping fastener can create a zero-clearance fit between fastener and upper arm 1250 such that vibration will not cause these parts to loosen over time and eliminate the need for a jam nut.

In various embodiments, the inserter 1260 can have a bottom wall (not shown) that the threaded fastener drills through during the insertion process. In various such embodiments, that bottom wall can include a starter hole (not shown) for the drill tip of the threaded fastener.

In various embodiments, the inserter 1260 can have inner threads with one or more anti-back out features (not shown) that prevent or limit the ability of the threaded fastener to be removed from the inserter.

The upper attachment hand 1270 is sized, shaped, and otherwise configured to engage a top surface of the part 4 of the overhead structure 2 such as shown in Figures 8 and 9.

The threaded rod receiver 1300 is similar or identical to the threaded rod receiver 300 and thus not described for brevity.

In this example embodiment, these components are made from suitable metal materials. It should be appreciated that these components can be made from other suitable materials in accordance with the present disclosure.

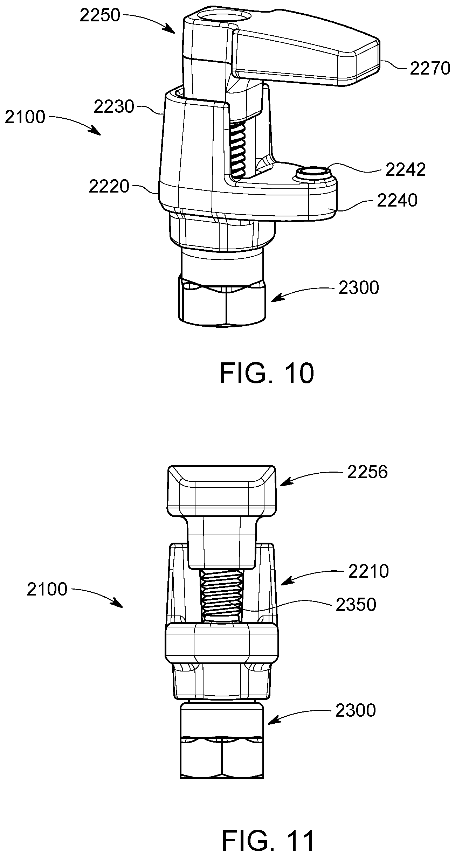

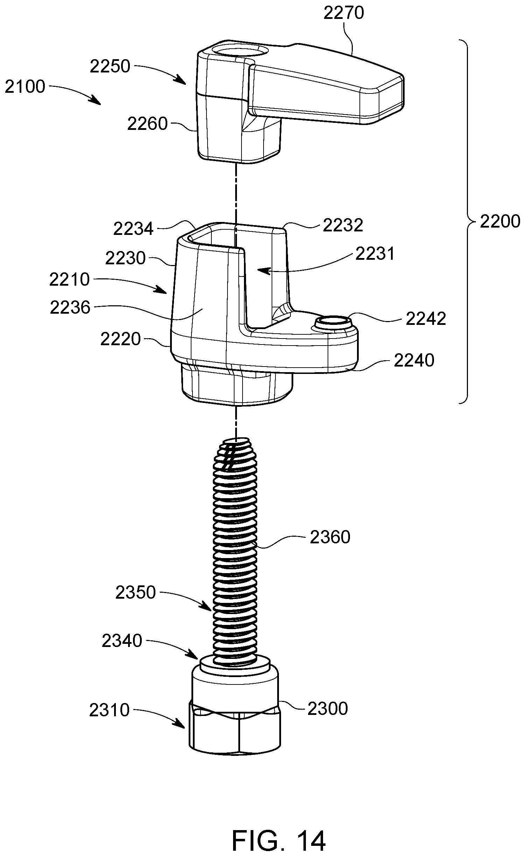

Figures 10, 11, 12, 13, and 14 illustrate a threaded rod hanger 2100 of another example embodiment of the present disclosure.

This example threaded rod hanger 2100 includes: (1) a connector 2200; and (2) a threaded rod receiver 2300.

The connector 2200 includes: (1) a lower arm 2210; and (2) an upper arm 2250 couplable and specifically receivable by the lower arm 2210.

More specifically, the lower arm 2210 includes a base 2220, a receiver 2230 connected to and extending upwardly from the base 2220, and a lower attachment hand 2240 connected to and extending transversely from the base 2220.

The base 2220 is configured to receive the threaded fastener 2350.

The receiver 2230 is sized, shaped, and otherwise configured to receive part of the upper arm 2250. The receiver 2230 includes connected walls 2232, 2234, and 2236 that define a receiving area 2231.

The lower attachment hand 2240 is sized, shaped, and otherwise configured to engage a bottom surface of a part of the overhead structure. The attachment hand 2240 includes an upwardly extending finger 2242 configured to engage the bottom surface of a part of the overhead structure.

The upper arm 2250 includes an inserter 2260 and an upper attachment hand 2270.

The inserter 2260 is sized, shaped, and otherwise configured to be partly inserted into and received by the receiving area 2231 of the receiver 2230 of the lower arm 2210. In this example embodiment, the inserter 2260 includes an inner surface (not labeled) and inner threads 2264 configured to be engaged by the thread of fastener 2350.

In other embodiments, the inserter 2260 includes an inner surface (not labeled) and no inner threads 2264 configured to be engaged by the thread of fastener. In such other example embodiments, the inserter 2260 is tapped by the threaded fastener. In such embodiments, when the threaded fastener taps the inserter 2260, a more perfect fit with no clearance issues can be formed between the inserter 2260 and the threaded fastener. In other words, the process of using a self-drilling and tapping fastener can create a zero-clearance fit between fastener and upper arm 2250 such that vibration will not cause these parts to loosen over time and eliminate the need for a jam nut.

In various embodiments, the inserter 2260 can have a bottom wall (not shown) that the threaded fastener drills through during the insertion process. In various such embodiments, that bottom wall can include a starter hole (not shown) for the drill tip of the threaded fastener.

In various embodiments, the inserter 2260 can have inner threads with one or more anti-back out features (not shown) that prevent or limit the ability of the threaded fastener to be removed from the inserter.

The upper attachment hand 2270 is sized, shaped and otherwise configured to engage a top surface of the part of the overhead structure.

The threaded rod receiver 2300 includes: (1) a rod receiver 2310; (2) a washer 2340; and (3) a threaded fastener 2350.

In this example embodiment, these components are made from suitable metal materials. It should be appreciated that these components can be made from other suitable materials in accordance with the present disclosure.

The rod receiver 2310 includes an inner surface (not labeled) and inner threads 2314 sized, shaped, and otherwise configured to threadably receive a threaded rod (not shown).

The rod receiver 2310 includes an outer surface (not labeled) sized, shaped, and otherwise configured to be engaged by a tool such as tool 500.

The threaded fastener 2350 is sized, shaped and otherwise configured to be inserted through the base 2220 of the lower arm 2210 and to be threadably received by the inserter 2260 of the upper arm 2250.

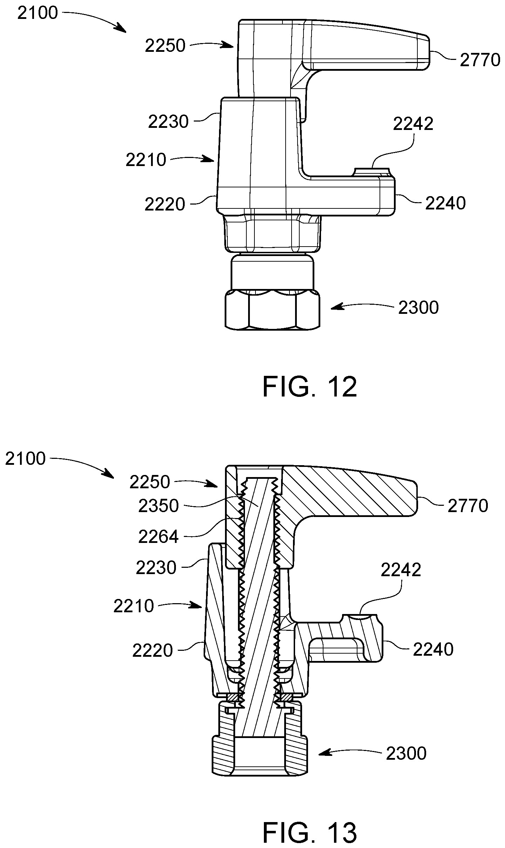

The threaded fastener 2350 includes outer threads 2360 configured to engage the inserter 2260 such as shown in Figure 13, but the inserter 2260 can be alternatively formed as mentioned above.

The threaded fastener 2350 is thus configured to securely connect the lower arm 2100 to the upper arm 2200. This secure connection causes the upper attachment hand 2270 and the lower attachment hand 2240 to engage and be securely attached to the part of the overhead structure.

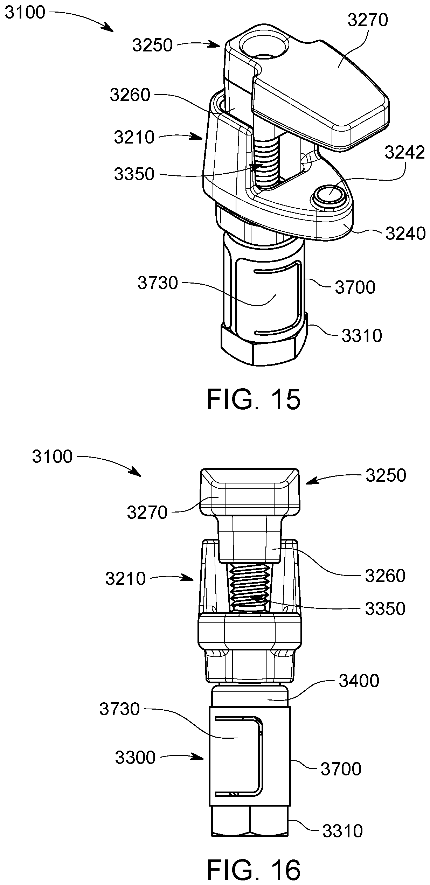

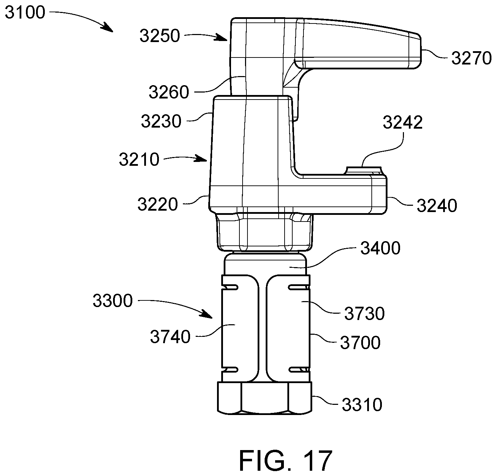

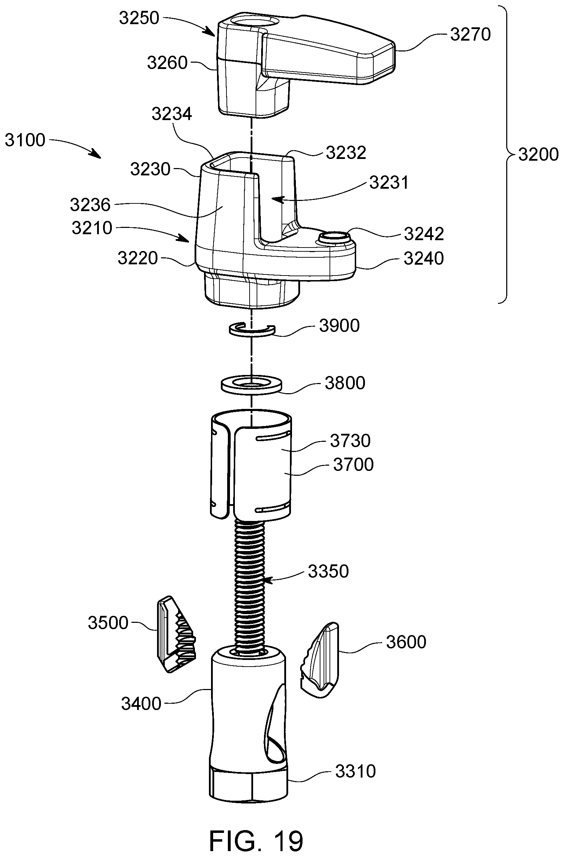

Figures 15, 16, 17, 18, and 19 illustrate a threaded rod hanger 3100 of another example embodiment of the present disclosure.

This example threaded rod hanger 3100 includes: (1) a connector 3200; and (2) a threaded rod receiver 3300.

The connector 3200 includes: (1) a lower arm 3210; (2) an upper arm 3250 couplable and specifically receivable by the lower arm 3210; (3) a washer 3800; and (4) a retaining ring 3900.

More specifically, the lower arm 3210 includes a base 3220, a receiver 3230 connected to and extending upwardly from the base 3220, and a lower attachment hand 3240 connected to and extending transversely from the base 3220.

The base 3220 is configured to receive the threaded fastener 3350.

The receiver 3230 is sized, shaped and otherwise configured to receive part of the upper arm 3250. The receiver 3230 includes connected walls 3232, 3234, and 3236 that define a receiving area 3231.

The lower attachment hand 3240 is sized, shaped, and otherwise configured to engage a bottom surface of a part of the overhead structure. The lower attachment hand 3240 includes an upwardly extending finger 3242 configured to engage the bottom surface of the part of the overhead structure.

The upper arm 3250 includes an inserter 3260 and an upper attachment hand 3270.

The inserter 3260 is sized, shaped, and otherwise configured to be partly inserted into and received by the receiving area 3231 of the receiver 3230 of the lower arm 3210.

In one example embodiment, the inserter 3260 includes an inner surface (not labeled) and inner threads (not shown) configured to be engaged by the thread of fastener 3350.

In the illustrated example embodiment, the inserter 3260 includes an inner surface (not labeled) and no inner threads configured to be engaged by the thread of fastener. In such example embodiments, the inserter 3260 is tapped by the threaded fastener. In such embodiments, when the threaded fastener taps the inserter 3260, a more perfect fit with no clearance issues can be formed between the inserter 3260 and the threaded fastener. In other words, the process of using a self-drilling and tapping fastener can create a zero-clearance fit between fastener and upper arm 3250 such that vibration will not cause these parts to loosen over time and eliminate the need for a jam nut.

In various embodiments, the inserter 3260 can have a bottom wall (not shown) that the threaded fastener drills through during the insertion process. In various such embodiments, that bottom wall can include a starter hole (not shown) for the drill tip of the threaded fastener.

In various embodiments, the inserter 3260 can have inner threads with one or more anti-back out features (not shown) that prevent or limit the ability of the threaded fastener to be removed from the inserter.

The upper attachment hand 3270 is sized, shaped and otherwise configured to engage a top surface of the part of the overhead structure.

The washer 3800 is plastic in this example embodiment and is sized, shaped, and otherwise configured to reduce friction during the tightening process.

The retaining ring 3900 is sized, shaped, and otherwise configured to keep the threaded rod hanger 3100 in an open position during shipping, and then has no function after installation. It should be appreciated that alternative suitable mechanisms for keeping threaded rod hanger 3100 in an open position during shipping can be employed in accordance with the present disclosure.

The threaded rod receiver 3300 includes: (1) a housing (not labeled) including a lower member 3310 and an upper member 3400; (2) two separate and independent internally threaded locking pucks 3500 and 3600; (3) a spring clip 3700; and (4) a threaded fastener 3350.

The lower member 3310 includes an outer surface (not labeled) sized, shaped, and otherwise configured to be engaged by a tool such as tool 500. The lower member 3310 is not internally threaded to enable the threaded rod to be inserted through the lower member 3310 and into engagements with the pucks 3500 and 3600.

The upper member 3400 and the lower member 3310 define puck receiving areas (not labeled).

The locking pucks 3500 and 3600 are identical in this example embodiment, and thus only locking puck 3500 is described herein for brevity. The locking puck 3500 includes an inner threaded section (not labeled) and outer spring engagement section (not labeled). The inner threaded section is configured to engage and secure the threaded rod. The outer spring engagement section is configured to be engaged by the spring clip 3700.

The spring clip 3700 includes a substantially cylindrical body having two puck engagement tabs 3730 and 3740. The spring clip 3700 is configured to be positioned around the housing and in engagement with the locking pucks 3500 and 3600. The spring clip 3700 is configured to apply inward biasing of the locking pucks 3500 and 3600 to cause the locking pucks 3500 and 3600 to securely engage the threaded rod, and in a manner that allows slight outward movement of the locking pucks 3500 and 3600 when the threaded rod is inserted into the housing. The spring clip 3700 is made from steel but can be made from other suitable materials.

The locking pucks 3500 and 3600, and the spring clip 3700 are thus configured to: (a) receive a threaded rod such as threaded rod via an upward insertion (such as upward pushing) of the threaded rod through the opening (not labeled) in the bottom end (not labeled) of the housing 3400; (b) thereafter, secure the threaded rod in the housing via engagement of the locking pucks 3500 and 3600 with the threaded rod wherein the locking pucks are inwardly biased by the spring clip 3700; and (c) thereafter enable upward adjustment of the height of the threaded rod via rotation of the threaded rod relative to the locking pucks 3500 and 3600, and the spring clip 3700.

The downward force of the threaded rod creates an inward force on and/or inward movement of one or both of the locking pucks 3500 and 3600, further magnifying the inward spring force that causes the locking pucks 3600 and 3700 to engage with the threaded rod. It should be appreciated that in certain embodiments only one locking puck may be implemented.

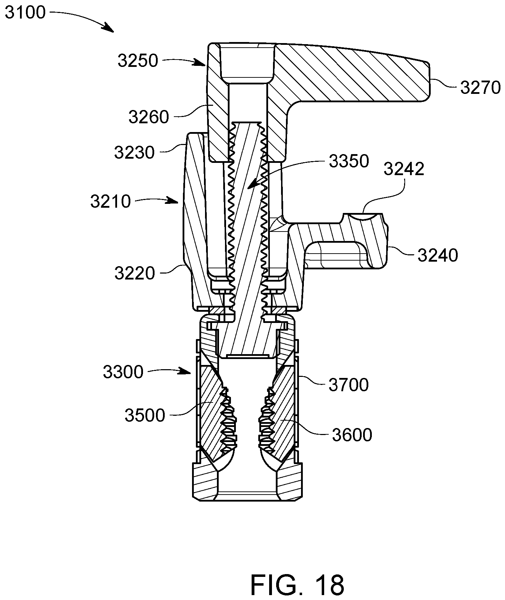

The head (not labeled) of the threaded fastener 3350 is sized, shaped, and otherwise configured to be inserted into and connected to the housing, and more specifically into the upper member of the housing 3400 before part of the upper member is inwardly bent to secure the head of the fastener 3350 as best seen in Figure 18.

The threaded fastener 3350 is sized, shaped, and otherwise configured to be inserted through the base 3220 of the lower arm 3210 and to be threadably received by the inserter 3260 of the upper arm 3250.

The threaded fastener 3350 includes outer threads (not labeled) configured to engage the inserter 3260 such as shown in Figure 18.

The threaded fastener 3350 is thus configured to securely connect the lower arm 3210 to the upper arm 3250. This secure connection causes the upper attachment hand 3270 and the lower attachment hand 3240 to engage and be securely attached to a part of the overhead structure (not shown).

In this example embodiment, these components are made from suitable metal materials. It should be appreciated that these components can be made from other suitable materials in accordance with the present disclosure.

Various changes and modifications to the above-described embodiments described herein will be apparent to those skilled in the art. These changes and modifications can be made without departing from the spirit and scope of this present subject matter and without diminishing its intended advantages.

## Claims

1. A threaded rod hanger comprising:
a connector including:
a lower arm including:
a base,
a receiver connected to and extending upwardly from the base, and
a lower attachment hand connected to and extending transversely from the base and configured to engage a bottom surface of a part of an overhead structure, and
an upper arm including:
an inserter configured to be at least partly inserted into and received by the receiver of the lower arm, and
an upper attachment hand connected to and extending transversely from the inserter, the upper attachment hand configured to engage a top surface of the part of the overhead structure; and
a threaded rod receiver including a rod hanger and a fastener having a head and a shaft having outer threads, the shaft extendable through the base and receiver of the lower arm and engageable with the inserter.

2. The threaded rod hanger of Claim 1, which includes an O-ring configured to keep the threaded rod hanger in an open position during shipping.

3. The threaded rod hanger of Claim 1, which includes a retaining ring configured to keep the threaded rod hanger in an open position during shipping.

4. The threaded rod hanger of Claim 1, wherein the lower attachment hand includes an upwardly extending finger configured to engage the bottom surface of the part of the overhead structure.

5. The threaded rod hanger of Claim 1, wherein the head of the fastener is secured to the threaded rod receiver.

6. The threaded rod hanger of Claim 1, wherein the inserter includes inner threads engagable by the fastener.

7. The threaded rod hanger of Claim 1, which includes one or more pucks engageable with the threaded rod and a spring clamp engaging the one or more pucks.

8. A threaded rod hanger comprising:
a connector including:
a lower arm including:
a base,
a receiver connected to and extending upwardly from the base, and
a lower attachment hand connected to and extending transversely from the base and configured to engage a bottom surface of a part of an overhead structure, and
an upper arm including:
an inserter configured to be at least partly inserted into and received by the receiver of the lower arm, and
an upper attachment hand connected to and extending transversely from the inserter, the upper attachment hand configured to engage a top surface of the part of the overhead structure; and
a threaded rod receiver including a housing including a lower member and an upper member, two separate and independent internally threaded locking pucks, a spring clip, and a threaded fastener connected to the upper member and having a shaft having outer threads, the shaft extendable through the base and receiver of the lower arm and engagable with the inserter.

9. The threaded rod hanger of Claim 8, wherein the head of the fastener is secured to the upper member.

10. The threaded rod hanger of Claim 8, wherein the upper member defines puck receiving areas.

11. The threaded rod hanger of Claim 8, wherein the upper member and the lower member define puck receiving areas.

12. The threaded rod hanger of Claim 8, wherein the spring clip includes a substantially cylindrical body having puck engagement tabs, wherein the spring clip is configured to be positioned around the housing and in engagement with the locking pucks.

13. The threaded rod hanger of Claim 8, wherein the threaded rod receiver includes an upper inner threaded section and a lower non-inner threaded section.

14. The threaded rod hanger of Claim 8, wherein the inserter includes inner threads engagable by the fastener.
